# EUROPEAN PATENT APPLICATION

(11) **EP 4 679 156 A1**
(43) Date of publication of application: **14.01.2026**
(21) Application number: 25185659.7
(22) Date of filing: 26.06.2025
(51) Int. Cl.: G02B 7/02, G02B 7/08

(54) **CAMERA MODULE AND ELECTRONIC DEVICE**

(30) Priority: 09.07.2024 CN 202410917641
(71) Applicant: Beijing Zitiao Network Technology Co., Ltd., Beijing 100190 (CN)
(72) Inventor: Guo, Heng, Beijing, 100028 (CN); Lai, Yi, Beijing, 100028 (CN); Yan, Zhihong, Beijing, 100028 (CN)
(74) Representative: Marks & Clerk LLP

(57) **Abstract**

The present application relates to the field of camera technology, and particularly relates to a camera module and an electronic device. The camera module comprises a base assembly; a lens assembly axially movably disposed on the base assembly; a temperature drift compensation assembly mounted to the base assembly, the temperature drift compensation assembly configured to be deformable to drive axial movement of the lens assembly relative to the base assembly; a control assembly electrically connected to the temperature drift compensation assembly, the control assembly configured to generate a control signal based on a temperature within the camera module, the temperature drift compensation assembly being able to deform in response to the control signal.

## Description

### FIELD

The present application relates to the field of camera technology, and particularly relates to a camera module and an electronic device.

### BACKGROUND

Nowadays, many scenarios in MR equipment, motion cameras, security devices and other products have very high requirements for clarity of their cameras. That is, the camera lens and the image sensor need to be in the quasi-focus position, and the relative position of the two needs to be highly stable to ensure that the image sensor is always on the best image plane.

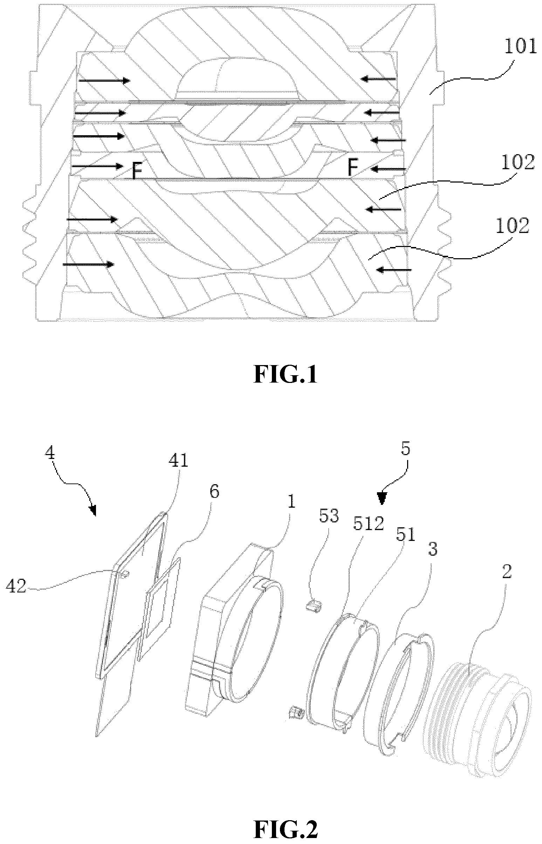

Due to cost and weight constrains, the lens assembly of commonly used camera module mostly has a structure of a combination of a pure plastic lens barrel plus a pure plastic lens (as illustrated in FIG. 1), or one or two layers of the pure plastic lens are replaced with a glass lens. For the lens assembly with such a structure, when the temperature changes, the lens and lens barrel will deform significantly (especially when the temperature increases. For example, the lens will be subject to inward squeezing force, resulting in the change of optical focal length), and the relative position of lens and image sensor changes, resulting in the change in lens field curvature and defocus. This has a great influence on the change of quasi-focus object distance of the module, which will directly cause unclear picture shooting quality and decrease of MTF.

In order to solve the temperature drift problem of the above-mentioned pure plastic or glass-plastic hybrid lens assembly, there are two common methods in the prior art: 1. an automatic zoom module is used instead to drive the lens assembly to move up and down via the voice coil motor, so as to offset the temperature drift change of the lens. However, this method is difficult to apply to the MR/motion camera as the focus speed of the voice coil motor cannot catch up with the acceleration of the user's head or hand, and it also increases the cost. 2. The lens barrel is made of metal material instead, and the lens is also mostly made of glass (the temperature drift of 6-layer lens made of pure glass can be controlled at < △ EFL 2 µm/10°C, while the temperature drift of pure plastic or glass-plastic hybrid f lens assembly is about △EFL 5-8 µm/10 °C). However, this approach undoubtedly greatly increases the cost of the lens assembly.

### SUMMARY

In order to solve the above-mentioned technical problems, the present application provides a camera module and an electronic device.

In a first aspect, the present application provides a camera module, comprising:
a base assembly;
a lens assembly axially movably disposed on the base assembly;
a temperature drift compensation assembly mounted to the base assembly, the temperature drift compensation assembly configured to be deformable to drive axial movement of the lens assembly relative to the base assembly;
a control assembly electrically connected to the temperature drift compensation assembly, the control assembly configured to generate a control signal based on a temperature within the camera module, the temperature drift compensation assembly being able to deform in response to the control signal.

Optionally, the temperature drift compensation assembly includes a temperature drift compensation body electrically coupled to the control assembly, the temperature drift compensation body being made of a shape memory alloy, the control signal being a current signal, and the shape memory alloy being deformable in response to the current signal.

Optionally, the temperature drift compensation body is in an integrated cylindrical structure; or
the temperature drift compensation body is in a split structure, and the temperature drift compensation body comprises a plurality of arc-shaped structures collectively enclosing a cylindrical shape.

Optionally, when the temperature drift compensation body is in the integrated cylindrical structure, the temperature drift compensation assembly comprises a plurality of sets of electrical connections, wherein the plurality of sets of electrical connections are uniformly distributed on the temperature drift compensation body, and each of the plurality of sets of the electrical connections forms a conductive loop with the control assembly; or
when the temperature drift compensation body is in the split structure, the temperature drift compensation assembly comprises a plurality of sets of electrical connections, each of the plurality of arc-shaped structures is correspondingly provided with a set of electrical connections, and the electrical connection forms a conductive loop with the control assembly.

Optionally, when the temperature drift compensation body is in the integrated cylindrical structure, the temperature drift compensation body comprises a first end and a second end oppositely arranged along an axial direction thereof, each of the plurality of sets of the electrical connections comprising a first connecting piece fixedly connected to the first end and a connecting point located at the second end; or
when the temperature drift compensation body is in the split structure, the arc-shaped structure comprises a third end and a fourth end oppositely arranged along the axial direction of the temperature drift compensation body, and each of the plurality of sets of the electrical connections comprising a second connecting piece fixedly connected to the third end and a connecting point located at the fourth end.

Optionally, the camera module further comprises a support assembly, and the lens assembly, the support assembly, the temperature drift compensation assembly and the base assembly being sleeved successively from the inside to the outside, the lens assembly being fixedly connected to the support assembly, and the temperature drift compensation assembly driving the support assembly and the lens assembly to move synchronously.

Optionally, the support assembly includes an annular insulating body, and an electrical connector fixed to the insulating body and electrically connected at one end to the control assembly and at the other end to the connecting point.

Optionally, the base assembly includes a first conductive path and a second conductive path arranged in a set, the first conductive path electrically connecting the connecting piece and the control assembly respectively, and the second conductive path electrically connecting the electrical connector and the control assembly respectively.

Optionally, both the first conductive path and the second conductive path are formed by a laser direct structuring process.

Optionally, the control assembly includes a circuit board and a temperature sensing element communicatively coupled to the circuit board.

The camera module of the present application does not change the structure of the existing pure plastic or glass-plastic hybrid lens assembly. Instead, the control assembly of the camera module of the present application generates, based on the temperature drift capability of the existing lens assembly, a control signal according to the temperature within the camera module and transmits same to the temperature drift compensation assembly. The temperature drift compensation assembly may respond to the control signal and deform according to the control signal, and then the deformation of the temperature drift compensation assembly drives the lens assembly to move axially relative to the base assembly so as to achieve accurate temperature compensation for the lens assembly. As such, the lens assembly and the image sensor can always be in a quasi-focus position; ensure that the image sensor is always on the best image plane. In addition, in the process of using the camera module in the present application, whether the module temperature is relatively high under a high load or the ambient temperature is relatively high, the clarity can be guaranteed to be equivalent to the initial state.

In addition, the camera module of the present application does not introduce a voice coil motor or an excessive glass lens, which is relatively lower in cost.

In a second aspect, the present application also provides an electronic device comprising the above-mentioned camera module. The camera module of the electronic device can always maintain a high degree of clarity, thereby obtaining high-quality image content.

### BRIEF DESCRIPTION OF THE DRAWINGS

The accompanying drawings, which are incorporated in and constitute a part of the Specification, illustrate embodiments of the application and, together with the Specification, serve to explain the principles of the present application.

In order to explain the embodiments of the present application or the technical solutions in the prior art more clearly, the following is a brief introduction to the drawings used in the embodiments or the description of the prior art; it would be obvious for a person skilled in the art to obtain other drawings according to the accompanying drawings without involving any inventive effort.
FIG. 1 is a force diagram of a lens assembly in the prior art according to an embodiment of the present application;
FIG. 2 is an exploded schematic view of a camera module according to an embodiment of the present application;
FIG. 3 is a cross-sectional view of a camera module according to an embodiment of the present application;
FIG. 4 is a schematic structural diagram of a base assembly of a camera module according to an embodiment of the present application;
FIG. 5 is a schematic structural diagram of a temperature drift compensation assembly of a camera module according to an embodiment of the present application;
FIG. 6 is a schematic structural diagram of a support assembly of a camera module according to an embodiment of the present application;
FIG. 7 is a schematic diagram illustrating an assembly process of a camera module according to an embodiment of the present application.

In the Drawings,
base assembly; 11: first conductive path; 12: second conductive path; 13: base body; 131: first base body; 132: second base body; 133: mounting plate; 14: optical filter;
lens assembly; 21: lens barrel; 22: lens;
temperature drift compensation component; 31: temperature drift compensation body; 311: avoidance port; 32: first connecting piece;
control component; 41: circuit board; 42: temperature sensing element;
support assembly; 51: insulating body; 511: edge portion; 512: slot; 52: electrical connector; 53: solder;
6: image sensor;
101: pure plastic lens barrel; 102: pure plastic lens.

### DETAILED DESCRIPTION OF EMBODIMENTS

In order to more clearly understand the foregoing purposes, features and advantages of the present application, the solutions of the present application will be further described below. It should be noted that the embodiments of the present application and the features in the embodiments may be combined without conflict.

In the following description, numerous specific details are set forth in order to provide a thorough understanding of the present application, but the present application may be practiced otherwise than as specifically described herein. It should be understood that the embodiments in the Specification are only a part of the embodiments of the present application, rather than all the embodiments.

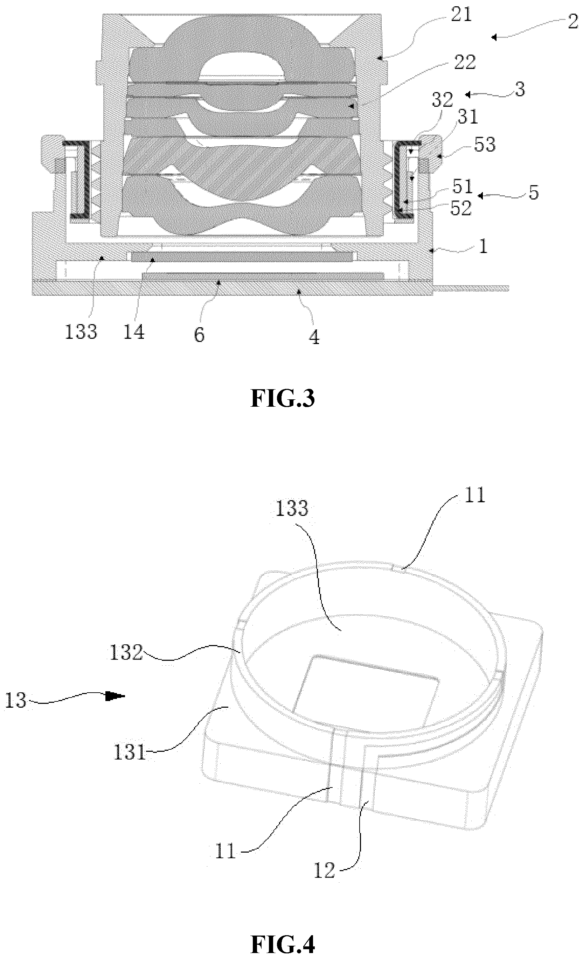

An embodiment of the present application provides a camera module, as shown in FIGs. 2 and 3, comprising a base assembly 1, a lens assembly 2, a temperature drift compensation assembly 3 and a control assembly 4. The base assembly 1 is arranged on the control assembly 4, the lens assembly 2 and the temperature drift compensation assembly 3 are both mounted on the base assembly 1, and the lens assembly 2 can move axially with respect to the base assembly 1.

Exemplarily, the camera module of the embodiment of the present application further comprises a support assembly 5, which is arranged between the lens assembly 2 and the temperature drift compensation assembly 3, and the lens assembly 2 can be fixed to the support assembly 5, for example, the lens assembly 2 and the support assembly 5 can be fixed by a threaded connection, or the lens assembly 2 and the support assembly 5 can be fixed by a clamping connection. The temperature drift compensation assembly 3 is able to drive the support assembly 5 and the lens assembly 2 to move synchronously. As an implementation, as shown in FIG. 3, the above-mentioned lens assembly 2, support assembly 5, temperature drift compensation assembly 3 and base assembly 1 of the example of the present application are sleeved successively from the inside to the outside.

It should be noted that the camera module further comprises an image sensor 6, which is arranged between the base assembly 1 and the control assembly 4, and is preferably fixed to the control assembly 4, and the structure and principle of the image sensor 6 are known and will not be described in detail.

In the embodiment of the present application, the base assembly 1 is used for carrying the above-mentioned temperature drift compensation assembly 3, support assembly 5 and lens assembly 2. As shown in FIG. 4, the above-mentioned base assembly 1 comprises a base body 13, an optical filter 14 arranged in the base body 13 and located at the center, and a first conductive path 11 and a second conductive path 12 arranged on the base body 13 and arranged in a set.

The above-mentioned base body 13 comprises a first base body 131 fixedly connected to the control assembly 4 and a second seat 132 fixed to the first base body 131, and preferably the first base body 131 and the second seat 132 are integrally formed.

With reference to FIG. 3, a mounting plate 133 is provided within the first base body 131, a mounting hole is provided at the center of the mounting plate 133, the above-mentioned optical filter 14 is attached and mounted at the mounting hole, and preferably, the optical filter 14 is arranged in a concentric structure with the mounting hole. Chambers are formed on both sides of the first base body 131 on the mounting plate 133, one of the chambers and the first base body 131 constitute a mounting chamber for accommodating the lens assembly 2, the support assembly 5 and the temperature drift compensation assembly 3, and the other chamber and the control assembly 4 together form a mounting chamber for placing the components of the control assembly 4 and the above-mentioned image sensor 6 (which will be described in detail when describing the control assembly 4).

The above-mentioned first base body 131 can be in a square structure, and the second base body 132 can be in a cylindrical structure; of course. It should be understood that structures of other shapes can also be selected as needed, as long as they can be adapted to electronic devices equipped with the camera module of the embodiment of the present application, and the embodiment of the present application is not limited thereto.

The above-mentioned first conductive path 11 and second conductive path 12 are both provided on the base body 13, and the first conductive path 11 and the second conductive path 12 are both distributed on the side walls of the first base body 131 and the second base body 132. The first electrical conduction path 11 and the second electrical conduction path 12 are used for electrically connecting the control assembly 4 and the temperature drift compensation assembly 3 to achieve circuit conduction between the control assembly 4 and the temperature drift compensation assembly 3.

Preferably, the base body 13 of the embodiment of the present application may be made of LDS-type plastics. LDS (Laser Direct Structuring Process) refers specifically to the technology of direct three-dimensional printing of circuit boards on special plastic parts using laser technology. The LDS-type plastic is formed by injection molding of a modified plastic containing an organic metal composite, and an activated region with a specific shape is obtained by laser irradiation, and then more metal atoms can be attached to the activated region through chemical plating, so as to obtain a functional circuit board. In other words, based on the characteristics of the LDS-type plastic, the first conductive path 11 and the second conductive path 12 can be formed directly on the base body 13, that is, both the first conductive path 11 and the second conductive path 12 are formed by a laser direct structuring process.

In an embodiment of the present application, the above-mentioned lens assembly 2 comprises a lens barrel 21 and a plurality of lenses 22 mounted in the lens barrel 21, wherein the lenses 22 are arranged to align with the above-mentioned filter 14. Exemplarily, the lens barrel 21 and the lenses 22 may be made of pure plastic, or the lens barrel 21 may be made of pure plastic, with most of the lenses 22 being made of pure plastic and one to two of the lenses 22 are glass lenses. In other words, the lens assembly 2 of the embodiment of the present application is a pure plastic or glass-plastic hybrid lens assembly which is common in the prior art.

In an embodiment of the present application, the above-mentioned temperature drift compensation assembly 3 is used for driving the lens assembly 2 to move axially relative to the base assembly 1 when the lens assembly 2 is deformed due to heat, thereby reducing or offsetting the temperature drift change of the lens assembly 2. In an embodiment of the present application, the control assembly 4 generates a control signal according to the temperature within the camera module and transmits same to the temperature drift compensation assembly 3, and the temperature drift compensation assembly 3 responds to the control signal and deforms according to the control signal, and then the lens assembly 2 can be driven to move by the deformation thereof. In an embodiment of the present application, the control signal may be a current signal input to the temperature drift compensation assembly 3. It should be noted that the control signal varies according to the temperature in the camera module, so that the magnitude of the deformation amount of the temperature drift compensation assembly 3 also varies.

The temperature drift compensation assembly 3 comprises a temperature drift compensation body 31 electrically connected to the control assembly 4. The temperature drift compensation body 31 may be made of a shape Memory alloy (SMA), preferably a nickel-titanium alloy. When an electric current is applied to the shape memory alloy, the shape memory alloy can be deformed, specifically, when the electric current is increased, the SMA heats up and shortens, and assumes an austenite state; when the current was reduced, the SMA cools down and elongates, and assumes a martensitic state. By virtue of the characteristics of SMA, the temperature drift compensating body 31 is deformed to drive the lens assembly 2 to move. In this embodiment, the temperature drift compensating body 31 is formed through drawing, heat treatment, and computer numerical control (CNC) lathe machining. Note that the temperature drift compensation assembly 3 of an embodiment of the present application moves the lens assembly 2 by a displacement amount (i.e., a temperature drift compensation amount) of between 15µm and 25µm, preferably 20µm.

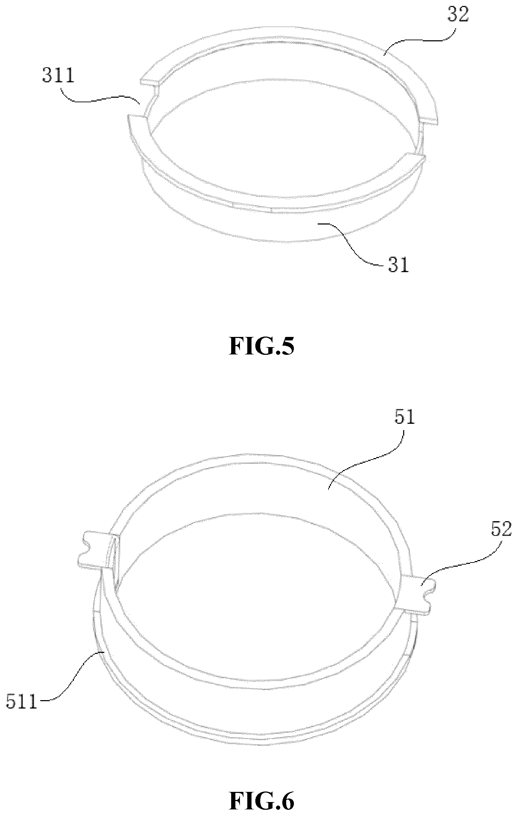

Referring to FIG. 5, in one embodiment, the temperature drift compensation body 31 is in an integrated cylindrical structure that may be circular in cross-section, square in cross-section, or other shapes, and this example is not particularly limited thereto. Accordingly, the temperature drift compensation assembly 3 comprises a plurality of sets of electrical connections, which are uniformly distributed on the temperature drift compensation body 31. Each of the sets of electrical connections forms a conductive loop with the control assembly 4 to realize the input of control signal (i.e., current signal) transmitted by the control assembly 4 to the temperature drift compensation assembly 3.

Exemplarily, the temperature drift compensating body includes a first end and a second end that are arranged opposite to each other along it axial direction. Each of the plurality of sets of electrical connections includes a first connection piece 32 fixedly connected to the first end of the temperature drift compensating body 31 and a connecting point at the second end of the temperature drift compensating body 31. The connection point may be located anywhere on the second end of the temperature drift compensating body 31. The above-mentioned first connecting piece 32 is electrically connected to the control assembly 4 via the first conductive path 11, and the first connecting piece 32 can be fixed to the first end of the temperature drift compensation body 31 by laser soldering, and the shape of the first connecting piece 32 is adapted to the cross-sectional shape of the temperature drift compensation body 31.

Preferably, the above-mentioned electrical connections may be arranged in an even number of sets. Since the plurality of sets of electrical connections are uniformly distributed on the temperature drift compensation body 31, in this case, the even number of sets of electrical connections are uniformly arranged on the temperature drift compensation body 31. Correspondingly, the above-mentioned first conductive paths 11 are also in an even number of sets, and the even number of sets of electrical connections and the first conductive paths 11 and the control assembly 4 can form an even number of conductive loops. Furthermore, when the control assembly 4 sends a current signal of the same magnitude to the temperature drift compensation body 31 via the electrical connection, the temperature drift compensation body 31 is uniformly heated and deformed, so that a uniform driving force can be generated on the lens assembly 2, thereby enabling the lens assembly 2 to move in an axial direction stably and without offset.

In an embodiment of the present application, an avoidance opening 311 is provided on one side of the temperature drift compensation body 31, and the avoidance opening 311 is used for avoiding a part of the support assembly 5, and the specific adapting structural relationship will be described later when describing the support assembly 5. Note that the number of the avoidance ports 311 is the same as the number of the electrical connections (i.e., conductive loops) and corresponds one to one.

In another embodiment, the temperature drift compensation body 31 is in a split structure. In particular, the temperature drift compensation body 31 comprises a plurality of arc-shaped structures (not shown in the Drawings) collectively enclosing a cylinder shape, and the temperature drift compensation assembly 3 comprises a plurality of sets of electrical connections. Each of the plurality of arc-shaped structures is correspondingly provided with a set of electrical connections, and the set of electrical connections form a conductive loop with the control assembly 4, so as to realize the input of the control signal (i.e., current signal) transmitted by the control assembly 4 to the temperature drift compensation assembly 3.

In this embodiment, the arc-shaped structure includes a third end and a fourth end oppositely arranged along the axial direction of the temperature drift compensation body 31. Each of the plurality of sets of electrical connections includes a second connection piece (not shown) fixedly connected to the third end of the arc-shaped structure and a connecting point located at the fourth end of the arc-shaped structure. The connecting point may be located anywhere on the fourth end of the arc-shaped structure. The above-mentioned second connecting piece is electrically connected to the control assembly 4 via the first conductive path 11, the second connecting piece can be fixed to the third end of the arc-shaped structure by soldering, and the shape of the second connecting piece is adapted to the cross-sectional shape of the arc-shaped structure.

As illustrated in FIG. 3, the control assembly 4 of an embodiment of the present application comprises a circuit board 41 and a temperature detection element 42 communicatively connected to the circuit board 41. The circuit board 41 can be either a printed circuit board (PCB) or a flexible circuit board (FPC), which has the same control function as a control board of a general camera module, and the detailed structure and principle thereof will not be described in detail in this embodiment. The circuit board 41 electrically connects the first conductive path 11 and the second conductive path 12.

The circuit board 41 and the other chamber of the first base body 131 together form a mounting chamber for placing the temperature sensing element 42 and the image sensor 6.

The above-mentioned temperature detection element 42 is used for detecting the temperature inside the camera module, and transmitting the temperature information to the circuit board 41. The circuit board 41 then controls the magnitude of the control signal (i.e., current signal) input to the above-mentioned temperature drift compensation assembly 3 according to the temperature information (for example, a drive IC component can enable current input of different magnitudes, which is known, and the principle thereof will not be described herein), thereby achieving the purpose of changing the deformation amount of the temperature drift compensation assembly 3, and thus achieving the control of the displacement of the lens assembly 2.

Alternatively, the temperature sensing element 42 may be an NTC thermistor, which enables sensing of the temperature inside the camera module. It should be understood that, in other embodiments, the temperature sensing element 42 may be another element having a temperature sensing function.

Note that the image sensor 6 of the embodiment of the present application is provided on the circuit board 41.

As shown in FIG. 6, the support assembly 5 comprises an annular insulating body 51 and an electrical connector 52 fixed to the insulating body 51. The annular insulating body 51 is made of plastic material, and the electrical connector 52 may be made of stainless steel or other conductive material. And preferably, both may be integrally injection molded. The above-mentioned electrical connector 52 has a "["-shaped structure, one end of which is located at the bottom is injection-molded to the insulation body 51, and the other end of which is vertical during injection molding, and is pressed against the other end of the insulation body 51 by bending after injection molding. At this time, the other end of the electrical connector 52 passes through the avoidance opening 311 of the above-mentioned temperature drift compensation body 31 so as to avoid contact between the other end of the electrical connector 52 and the temperature drift compensation body 31. In an embodiment of the present application, the inner wall of the insulating body 51 may be provided with an inner thread (not shown in the Drawings), and the outer wall of the lens barrel 21 of the lens assembly 2 is also provided with an outer thread, and the lens assembly 2 and the insulating body 51 are fixed by the threaded connection between the inner thread and the outer thread.

One end of the electrical connector 52 is electrically connected to the second conductive path 12 (specifically, the two can be electrically connected by soldering via solder 53), and is electrically connected to the circuit board 41 of the control assembly 4 via the second conductive path 12, and the other end of the electrical connector 52 is electrically connected to the connecting point. In this connection manner, the circuit board 41, the second conductive path 12, the electrical connector 52, the temperature drift compensation body 31, the first connecting piece 32 (or the second connecting piece) and the first conductive path 11 together form a conductive loop, so as to realize the current circulation in the temperature drift compensation body 31, thereby deforming the temperature drift compensation body 31.

Preferably, the bottom of the insulating body 51 is provided with an outwardly extending edge portion 511, the edge portion 511 is provided with a slot 512 (shown in FIG. 2), one end of the bottom of the above-mentioned electrical connector 52 is placed in the slot 512, and the upper surface of the one end of the bottom of the electrical connector 52 is flush with the upper surface of the edge portion 511, and the end surface of the one end of the bottom of the electrical connector 52 is flush with the side wall surface of the edge portion 511. The bottom of the above-mentioned temperature drift compensation unit 3 is placed on and supported by the edge portion 511, and the bottom of the temperature drift compensation unit 3 may be fixed to the upper surface of one end of the bottom of the electrical connector 52 by soldering.

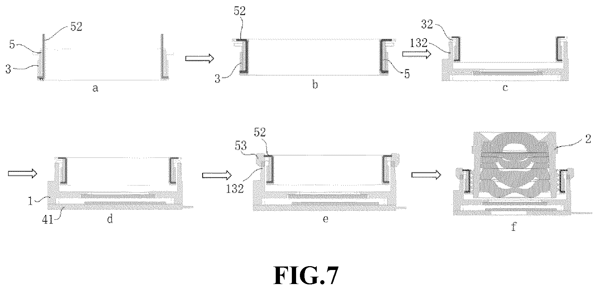

The camera module of an embodiment of the present application is assembled as illustrated in FIG. 7. Firstly, as shown in step a, the temperature drift compensation assembly 3 is sleeved outside the support assembly 5, and the bottom of the temperature drift compensation assembly 3 is fixedly and conductively connected to one end of the bottom of the electrical connector 52 by soldering. At this time, the other end of the electrical connector 52 at the top of the support assembly 5 is in a vertical state and has not been bent.

As shown in step b of FIG. 7, other end of the electrical connector 52 at the top is then bent to a horizontal soldering angle. Then, as shown in step c, the bottom of the first connecting piece 32 (or the second connecting piece) of the temperature drift compensation assembly 3 is glued and adhered on the top surface of the second base body 132 of the base assembly 1, and at this time, the first connecting piece 32 is electrically connected to the first conductive path 11.

Then, as shown in step d of FIG. 7, the base assembly 1 and the circuit board 41 of the control assembly 4 are glued together, during which the alignment is performed by the LHA or AA process to reduce the assembly tolerances of both.

Then, as shown in step e of FIG. 7, the other end of the electrical connector 52 at the top is electrically connected to the second conductive path 12 on the second base body 132 by soldering, and both the first conductive path 11 and the second conductive path 12 on the first base body 131 are soldered to the circuit board 41 of the control assembly 4.

Finally, as shown in step f of FIG. 7, the lens assembly 2 is fixed to the insulating body 51 of the support assembly 5 by a threaded connection, so as to realize the installation of the lens assembly 2, and then the assembly of the whole camera module is completed.

In the process of using the camera module of the embodiment of the present application, when the lens assembly 2 deforms due to a temperature increase, a control signal (i.e., a current signal) is input to the temperature drift compensation assembly 3 via the control assembly 4, and the temperature drift compensation body 31 of the temperature drift compensation assembly 3 heats up and shortens, and at this time, the lens assembly 2 can be driven to move upwards so as to realize accurate temperature compensation for the lens assembly 2. In addition, by detecting the temperature within the camera module in real time via the temperature detection element 42 of the control assembly 4, the control assembly 4 can adjust the magnitude of the current input to the temperature drift compensation assembly 3 in real time, thereby controlling the expansion and contraction of the temperature drift compensation body 31, and thus the micro-adjustment of the lens assembly 2 is realized, so that the image plane of the lens assembly 2 always coincides with the image sensor 6 under different temperatures.

The camera module of the embodiment of the present application does not change the structure of the existing pure plastic or glass-plastic hybrid lens assembly 2. Instead, the camera module of the embodiment of the present application can realize accurate temperature compensation for the lens assembly 2 based on the temperature drift capability of the existing lens assembly 2, so that the lens assembly 2 and the image sensor 6 can always be in a quasi-focus position, and ensure that the image sensor 6 is always on an optimal image plane. Also, without the introduction of a voice coil motor or an excessive number of glass lenses 22, the manufacturing cost is effectively reduced and is suitable for mass production. In addition, the lens assembly 2 of the camera module in the present application is highly compatible, and a matched support assembly 5 can be customized to adapt to lens modules with different diameters.

The embodiment of the present application also provides an electronic device comprising the above-mentioned camera module, wherein the electronic device can be an MR device, a motion camera, a security device, etc. which has a high requirement for the clarity of a camera. The camera module of the electronic device can always maintain a high degree of clarity, thereby obtaining high-quality image content.

It is noted that relational terms such as "first", "second", and the like may be used solely to distinguish one entity or operation from another entity or operation without necessarily requiring or implying any actual such relationship or order between such entities or operations herein. Furthermore, the terms "comprise", "comprising", "include", "including" or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a..." does not, without more constraints, preclude the existence of additional identical elements in the process, method, article, or apparatus that comprises the element.

The previous description of the disclosed embodiments is provided to enable any person skilled in the art to make or use the present disclosure. Various modifications to these embodiments will be readily apparent to those skilled in the art, and the generic principles defined herein may be implemented in other embodiments without departing from the scope of the application. Thus, the present application is not intended to be limited to the embodiments shown herein but is to be accorded the widest scope consistent with the principles and novel features disclosed herein.

## Claims

1. A camera module comprising:
a base assembly (1);
a lens assembly (2), axially movably disposed on the base assembly (1);
a temperature drift compensation assembly (3), mounted to the base assembly (1), the temperature drift compensation assembly (3) being configured to be deformable to drive axial movement of the lens assembly (2) relative to the base assembly (1);
a control assembly (4), electrically connected to the temperature drift compensation assembly (3), the control assembly (4) being configured to generate a control signal based on a temperature within the camera module, the temperature drift compensation assembly (3) being able to deform in response to the control signal.

2. The camera module of claim 1, wherein the temperature drift compensation assembly (3) comprises a temperature drift compensation body (31) electrically connected to the control assembly (4), the temperature drift compensation body (31) being made of a shape memory alloy, the control signal being a current signal, the shape memory alloy being deformable according to the current signal.

3. The camera module of claim 2, wherein the temperature drift compensation body (31) is in an integrated cylindrical structure; or
the temperature drift compensation body (31) is in a split structure, the temperature drift compensation body (31) comprising a plurality of arc-shaped structures collectively enclosing a cylindrical shape.

4. The camera module of claim 3, wherein, in response to the temperature drift compensation body (31) being in the integrated cylindrical structure, the temperature drift compensation assembly (3) comprises a plurality of sets of electrical connections, wherein the plurality of sets of electrical connections are uniformly distributed on the temperature drift compensation body (31), and each of the plurality of sets of the electrical connections forms a conductive loop with the control assembly (4); or
in response to the temperature drift compensation body (31) being in the split structure, the temperature drift compensation assembly (3) comprises a plurality of sets of electrical connections, each of the plurality of arc-shaped structures is correspondingly provided with a set of electrical connections, and the electrical connections form a conductive loop with the control assembly (4).

5. The camera module of claim 4, wherein, in response to the temperature drift compensation body (31) being in the integrated cylindrical structure, the temperature drift compensation body (31) comprises a first end and a second end oppositely arranged along an axial direction thereof, each of the plurality of sets of the electrical connections comprises a first connecting piece (32) fixedly connected to the first end and a connecting point located at the second end; or
in response to the temperature drift compensation body (31) being in the split structure, the arc-shaped structure comprises a third end and a fourth end oppositely arranged along the axial direction of the temperature drift compensation body (31), and each of the plurality of sets of the electrical connections comprises a second connecting piece fixedly connected to the third end and a connecting point located at the fourth end.

6. The camera module of claim 5, wherein the camera module further comprises a support assembly (5), the lens assembly (2), the support assembly (5), the temperature drift compensation assembly (3) and the base assembly (1) being sleeved successively from the inside to the outside, and the lens assembly (2) being fixedly connected to the support assembly (5), and the temperature drift compensation assembly (3) driving the support assembly (5) and the lens assembly (2) to move synchronously.

7. The camera module of claim 6, wherein the support assembly (5) comprises an annular insulating body (51), and an electrical connector (52) fixed to the insulating body (51), the electrical connector (52) having one end electrically connected to the control assembly (4) and the other end electrically connected to the connecting point.

8. The camera module of claim 7, wherein the base assembly (1) comprises a first conductive path (11) and a second conductive path (12) arranged in a set, the first conductive path (11) electrically connecting the connecting piece and the control assembly (4) respectively, and the second conductive path (12) connecting the electrical connector (52) and the control assembly (4) respectively.

9. The camera module of claim 8, wherein the first conductive path (11) and the second conductive path (12) are both formed by a laser direct structuring process.

10. An electronic device comprising a camera module according to any of claims 1-9.
